# EUROPÄISCHE PATENTANMELDUNG

(11) **EP 1 076 399 A2**
(43) Veröffentlichungstag der Anmeldung: **14.02.2001**
(21) Anmeldenummer: 00116471.4
(22) Anmeldetag: 29.07.2000
(51) Int. Cl.: H02K 7/10, H02K 7/06

(54) **Linearantrieb**

(30) Priorität: 12.08.1999 DE 29914126 U
(71) Anmelder: Dewert Antriebs- und Systemtechnik GmbH & Co. KG, D-32278 Kirchlengern (DE)
(72) Erfinder: Roither, Andreas, 33649 Bielefeld (DE)
(74) Vertreter: Specht, Peter, Dipl.-Phys.

(57) **Zusammenfassung**

Ein Linearantrieb (10) der mit einem Antriebsmotor (16) und einem Untersetzungsgetriebe (12, 13) ausgestattet ist, soll in einfachster Weise so gestaltet werden, dass der Antriebsmotor (10) in jede oder nahezu jede mögliche Stellung zur Spindel angeordnet werden kann, wobei eine kompakte Bauweise und ein geräuscharmer Betrieb möglich sein soll.

Erfindungsgemäß ist die Antriebsanordnung mit ein oder mehreren strangförmigen sowie biegsamen Antriebselementen und/oder mit ein oder mehreren Kugel- bzw. Kreuzgelenken ausgestattet. Die Drehachse des Rotors des Antriebsmotors (16) kann parallel und im Abstand zur Drehachse der Spindel (15) sowie auch unter einem spitzen Winkel zur Spindel (15) stehen.

Der erfindungsgemäße Linearantrieb ist besonders als Möbelantrieb geeignet.

## Beschreibung

Die Erfindung betrifft einen Linearantrieb mit mindestens einer Spindel, die jeweils von einer Antriebsanordnung rotierend antreibbar ist, die einen Antriebsmotor und ein damit antriebstechnisch gekoppeltes Untersetzungsgetriebe enthält.

Der in Frage kommende Linearantrieb wird bevorzugt zum Verstellen von Möbelbauteilen eingesetzt. Die Leistung ist demzufolge relativ gering. Der Antriebsmotor ist üblicherweise ein Gleichstrommotor, der mit einer Sicherheitsspannung beaufschlagt wird. Durch das Untersetzungsgetriebe wird die Drehzahl der Spindel gegenüber der Motorwelle erheblich reduziert. Der Linearantrieb ist außerdem mit einem Gehäuse ausgestattet. Bei Drehung der Spindel wird eine darauf aufgesetzte, gegen Verdrehung gesicherte Spindelmutter linear verfahren und betätigt über einen Hebel oder ein ähnliches Bauteil das angeschlossene Möbelbauteil. Die in Frage kommenden Linearantriebe sind entweder Einzelantriebe mit einem Antriebsmotor, einem Untersetzungsgetriebe und einer Spindel oder Doppelantriebe mit zwei Antriebsmotoren und zwei Untersetzungsgetrieben und zwei Spindeln, wobei jeder Antriebsmotor einzeln geschaltet werden kann. Bei den in Rede stehenden Antrieben besteht demzufolge jede Antriebsanordnung aus dem Antriebsmotor, dem Untersetzungsgetriebe und der Spindel. Die Untersetzungsgetriebe sind vorzugsweise Schneckengetriebe. Die Schnecke ist direkt auf den Abtriebszapfen des Antriebsmotors aufgesetzt. Daraus ergibt sich, dass die Motorwelle rechtwinklig zur Spindel steht. Da die in Frage kommenden Linearantriebe in äußerst begrenzte Einbauräume montiert werden, kann eine derartige Anordnung nicht für alle Einsatzfälle verwendet werden.

Es sind ebenfalls Linearantriebe bekannt, bei denen die Motorwelle über zwei Kegelräder die Spindel antreibt. Derartige Antriebe sind jedoch für einen Möbelantrieb ungeeignet, da das Drehzahlverhältnis der Motorwelle zur Spindel relativ klein ist. Daraus würde sich eine viel zu hohe Geschwindigkeit der Spindelmutter ergeben.

Der Erfindung liegt die Aufgabe zugrunde, einen Linearantrieb der eingangs näher beschriebenen Art in einfacher Weise so zu gestalten, dass der Antriebsmotor bzw. die Antriebsmotoren in jede oder nahezu jede mögliche Stellung zur Spindel angeordnet werden können, wobei eine kompakte Bauweise und ein geräuscharmer Betrieb möglich sein soll.

Die gestellte Aufgabe wird gelöst, indem die Antriebsanordnung mit mindestens einem Antriebselement ausgestattet ist, dessen Abtriebsglied gegenüber dem Eingangselement wahlweise einstellbar ist.

Bei dem erfindungsgemäßen Linearantrieb wird die Antriebsanordnung um das einstellbare bzw. um die einstellbaren Antriebselemente erweitert. Die Stellung des Eingangselementes zum Abtriebsglied richtet sich nach den Einbauverhältnissen. Es ist zwar grundsätzlich möglich, dass die Motorwelle senkrecht zur Spindel steht, jedoch kann der Abstand des Antriebsmotors zur Spindel wesentlich verändert vorzugsweise vergrößert werden. Bevorzugt wird jedoch der Antriebsmotor in einer nicht rechtwinkligen Anordnung zur Spindel gesetzt. Grundsätzlich ist es auch möglich, den Antriebsmotor von den restlichen Bauteilen abzukoppeln, so dass insbesondere bei engen Einbauräumen der Antriebsmotor an einem freien Platz montiert werden kann. Das Antriebselement mit einer Einstellmöglichkeit des Abtriebsgliedes gegenüber dem Eingangselement bzw. auch umgekehrt ist normalerweise so ausgelegt, dass die übertragbaren Drehmomente relativ klein sind, jedoch zur Verstellung von Bauteilen eines Möbels, wie z.B. Lattenroste, Bauteile eines Sessels oder dergleichen ausreichend sind. Da der Linearantrieb bei einem Möbel so montiert wird, dass die Bauteile unsichtbar sind, besteht durch das zusätzliche Antriebselement keine Unfallgefahr. Da ein besonderer Schutz entfallen kann, ist der erfindungsgemäße Linearantrieb äußerst geräuscharm. Durch das einstellbare Antriebselement ist es nunmehr möglich, den Antriebsmotor an jeder geeigneten Stelle anzuordnen.

Besonders vorteilhaft ist, wenn das Antriebselement so ausgelegt ist, dass das Eingangselement gegenüber dem Abtriebsglied innerhalb des möglichen Verstellbereiches stufenlos einstellbar ist. Dadurch kann der Antriebsmotor in jeder beliebigen Stellung zur Spindel gesetzt werden. Das Antriebselement ist zweckmäßigerweise ein strangförmiges, biegsames Antriebselement oder mit wenigstens einem Gelenk, beispielsweise einem Kugel- oder einem Kreuzgelenk ausgestattet. Ein strangförmiges Antriebslement ist beispielsweise die allgemein bekannte biegsame Welle während bei der Verwendung von Gelenken Kardan- oder Gelenkwellen in Frage kommen. Sofern das Antriebselement mehrere im Abstand zueinander stehende Gelenke aufweist, kann der gesamte Umlenkwinkel relativ groß sein. Es ist jedoch auch möglich, dass die Antriebsanordnung aus mindestens zwei verschiedenen Antriebselementen gebildet ist, beispielsweise aus ein oder mehreren strangförmigen und biegsamen Antriebselementen und ein oder mehrere Kugel- oder Kreuzgelenke enthält, so dass je nach den Einbauverhältnissen die entsprechende Kombination gewählt werden kann. Zweckmäßiger Weise ist der Antriebsmotor und das Untersetzungsgetriebe durch das einstellbare Antriebselement miteinander antriebstechnisch gekoppelt. Diese Anordnung bietet den Vorteil, dass das geringste Drehmoment übertragen werden muß, während bei einer Koppelung, die grundsätzlich auch möglich ist, des Untersetzungsgetriebes mit der Spindel durch das Antriebselement ein entsprechend hohes Drehmoment übertragen werden muß.

Der Antriebsmotor kann beliebig plaziert werden. So ist es beispielsweise möglich, daß die Drehachse des Rotors des Antriebsmotors parallel und im Abstand zur Drehachse der Spindel steht. Die Spindel eines Linearantriebes liegt in dem sogenannten Flanschrohr, welches fest am Gehäuse angeordnet ist. Bei der zuvor beschriebenen Anordnung ist es dann möglich, daß der Antriebsmotor außen direkt an einem Flanschrohr befestigt ist. Je nach der Möglichkeit, wie der Linearantrieb beispielsweise in freie Räume eines Möbels eingebaut werden kann, ist es auch möglich, daß die Drehachse des Rotors des Antriebsmotors schräg zur Drehachse der Spindel steht. Dabei sollte der von der Spindel und der Motorwelle eingeschlossene Winkel ein spitzer Winkel sein. Der Antriebsmotor könnte bei einer solchen Ausführung an einem Halter montiert sein, der am Gehäuse oder am Flanschrohr des Linearantriebes angesetzt ist. Zweckmäßigerweise ist auch bei dem in Rede stehenden Linearantrieb das Untersetzungsgetriebe ein Schneckentrieb, wobei die Schnecke mit dem einstellbaren Antriebselement gekoppelt ist. Dadurch wird in an sich bekannter Weise das relativ hohe Drehzahlverhältnis des Antriebsmotors zur Spindel erreicht.

Bei Einsatz des Linearantriebes als Möbelantrieb wird das angeschlossene Möbelbauteil sowohl bei der Aufwärts- als auch bei der Abwärtsbewegung durch den Linearantrieb angetrieben. Es kann jedoch erforderlich sein, daß die Abwärtsbewegung mit erhöhter Geschwindigkeit durch das Eigengewicht durchgeführt werden soll. In diesem Fall müßte der Linearantrieb ausgerückt werden. Es ist deshalb vorgesehen, daß das einstellbare Antriebselement mittels einer ausrückbaren Kupplung mit dem Antriebsmotor gekoppelt ist. Damit das einstellbare Antriebselement auch relativ stark verformt werden kann, ist vorgesehen, daß es aus einer Vielzahl von Windungen besteht, die durch Wickeln eines Drahtes gebildet sind. Ein solches Antriebselement läßt sich außerdem in einfachster Weise herstellen. Um das zu übertragende Drehmoment zu erhöhen, ist vorgesehen, daß das strangförmige und biegsame Antriebselement aus mehreren ineinander geschobenen Lagen von Windungen unterschiedlichen Durchmessers gebildet ist. Sinngemäß wird dadurch die Wandstärke des strangförmigen Antriebselementes erhöht.

Der Einsatz eines Antriebselementes dessen Eingangselement gegenüber dem Abtriebsglied einstellbar ist, erlaubt weitere Möglichkeiten. So ist es denkbar, dass Linearantriebe in der bislang bekannten Bauart zu einer Antriebseinheit zusammengefügt werden, und dass das Getriebe jedes Linearantriebes über ein Verteilergetriebe mittels des Antriebselementes antreibbar ist. Es besteht dann die Möglichkeit, dass von einem Motor aus mehrere Linearantriebe angetrieben werden. Zwischen dem Motor und den Linearantrieben wird dann ein Verteilergetriebe zwischengeschaltet, wobei in einer anderen Ausführung auch zwei oder mehr Verteilergetriebe von einem Motor angetrieben werden können. An die Ausgangszeiten sind dann die Antriebselemente angekoppelt. Besonders vorteilhaft ist bei einer solchen Ausführung, dass durch einen Handschalter über eine Steuereinheit antreibbar ist. Das Verteilergetriebe könnte auch schaltbar sein, so dass nur ausgewählte Linearantriebe bei eingeschaltetem Antriebsmotor in Betrieb gesetzt werden.

Anhand der beiliegenden Zeichnungen wird die Erfindung noch näher erläutert. Es zeigen:
- **Fig. 1**: den erfindungsgemäßen Linearantrieb in einer ersten Ausführung,
- **Fig. 2**: den erfindungsgemäßen Linearantrieb in einer zweiten Ausführung und
- **Fig. 3**: den Linearantrieb gemäß der Figur 2 in einer Seitenansicht mit Blick auf das Flanschrohr
- **Fig. 4**: eine aus mehreren Linearantrieben gebildete Antriebseinheit, bei der jeder Linearantrieb über das einstellbare Antriebselement antreibbar ist.

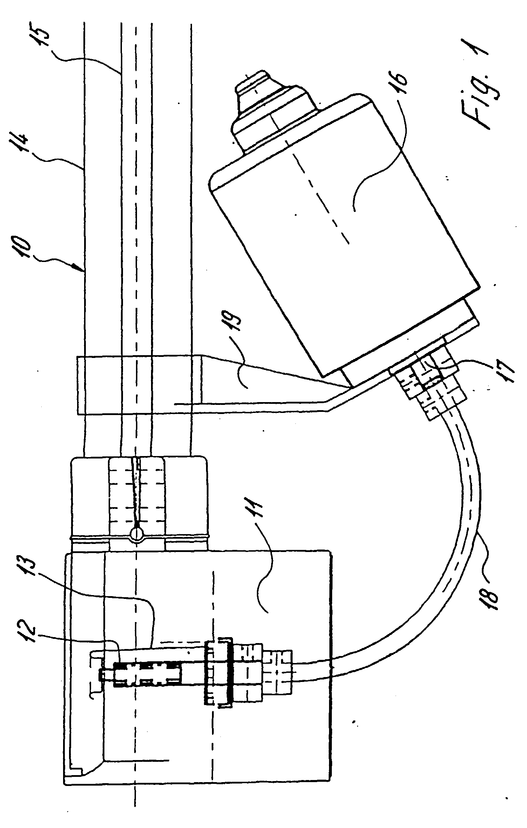

Die in den Figuren 1 bis 3 dargestellten Linearantriebe 10 sind als Möbelantriebe ausgelegt. In einem Gehäuse 11 ist ein Schneckentrieb gelagert, der aus einer angetriebenen Schnecke 12 und einem damit in Eingriff stehenden Schneckenrad 13 gebildet ist. An das Gehäuse 11 ist in der bekannten Weise ein Flanschrohr 14 angesetzt, in dem die Spindel 15 gelagert ist. Die auf die Spindel 15 aufgesetzte Spindelmutter ist aus Gründen der vereinfachten Darstellung nicht gezeichnet. Die Schnecke 12 wird von einem Antriebsmotor 16 angetrieben, dessen Abtriebszapfen 17 über nicht näher erläuterte Kuppelelemente mit einem biegsamen und strangförmigen Antriebselement 18 gekoppelt ist. Das andere Ende des Antriebselementes 18 ist mit der Schnecke 11 gekoppelt. Bei der Ausführung nach der Figur 1 ist auf das Flanschrohr 14 ein Halter 19 aufgestülpt, an dem der Antriebsmotor 16 festgelegt ist. Dieser Halter ist so gestaltet, daß die Drehachse des Antriebsmotors 16 schräg zur Drehachse der Spindel 15 steht. Im dargestellten Ausführungsbeispiel beträgt der eingeschlossene Winkel circa 45°. Es sind jedoch auch andere Winkel möglich.

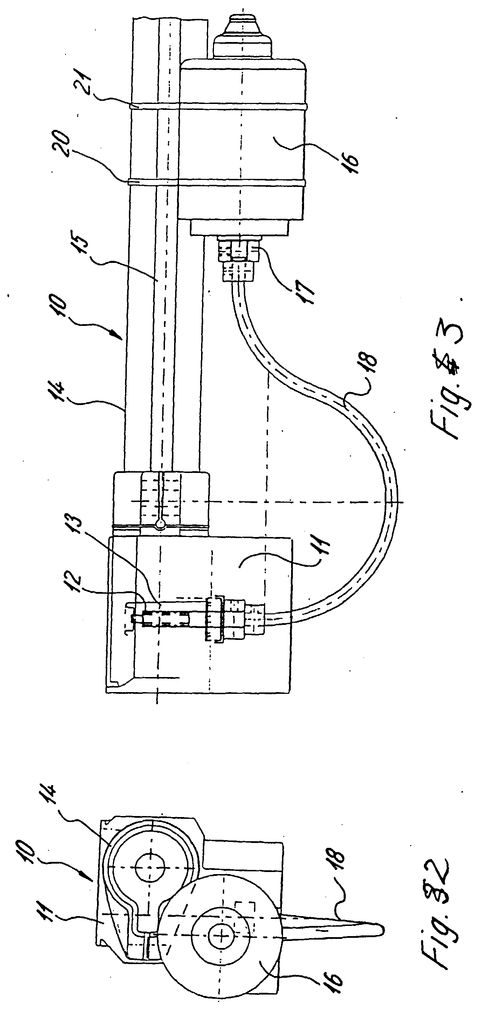

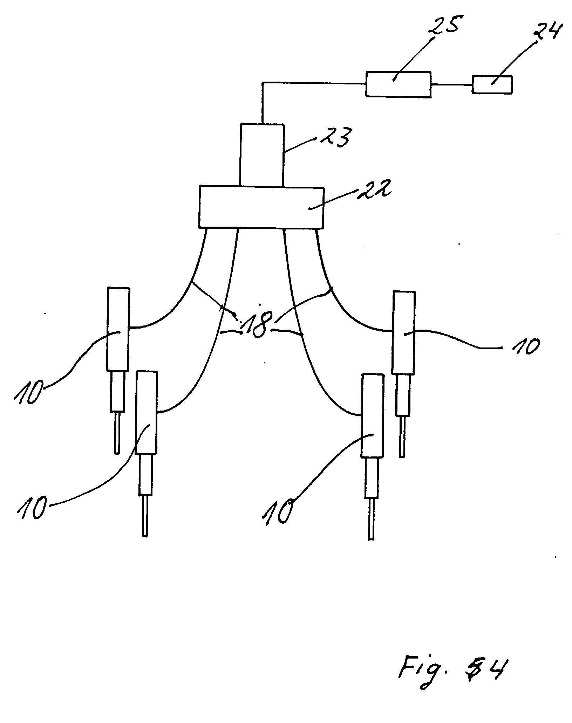

Das Ausführungsbeispiel gemäß den Figuren 2 und 3 unterscheidet sich von dem der Figur 1 dadurch, daß die Drehachse des Antriebsmotors 16 parallel und im Abstand zur Drehachse der Spindel 15 steht. Der Antriebsmotor 16 ist durch zwei Bänder 20, 21 am Flanschrohr 14 festgelegt. Damit die Biegung des Antriebselementes 18 nicht extrem groß wird, ist der Abstand zwischen dem Gehäuse 11 und dem Antriebsmotor 16 vergrößert.

In dem dargestellten Ausführungsbeispielen ist ein sogenannter Einzelantrieb mit einem Antriebsmotor 16 und einer Spindel 15 dargestellt. Entgegen den Darstellungen könnte der Linearantrieb jedoch auch als ein Doppelantrieb mit zwei Antriebsmotoren, zwei Untersetzungsgetrieben und zwei Spindeln 15 gestaltet sein. In den dargestellten Ausführungsbeispielen sind die Antriebsmotoren 16 am Flanschrohr 14 angeordnet. Entgegen den Darstellungen könnten die Antriebsmotoren auch von dem eigentlichen Linearantrieb abgekoppelt werden und an geeigneter Stelle am Möbel befestigt werden.

Im Gegensatz zu einem biegsamen, strangförmigen Antriebselement könnte auch ein Antriebselement verwendet werden, welches mit ein- oder mehreren Gelenken ausgestattet ist. Als Gelenke kommen Kugel- oder Kreuzgelenke bevorzugt in Betracht. Derartige Elemente werden als Kadern oder Gelenkwellen bezeichnet.

Die Figur 4 zeigt eine Ausführung, bei der aus mehreren Linearantrieben 10 eine Antriebseinheit gebildet wird. Jeder Linearantrieb wird über ein einstellbares Antriebselement 18 angetrieben. Es ergibt sich aus der Figur 4, dass die dort gezeigte Anordnung beispielhaft zu sehen ist, da die Linearantriebe 10 praktisch in jeder Stellung zueinander angeordnet werden können. Die bereits erwähnten Antriebselemente 18 sind an die Abtriebselemente eines Verteilergetriebes 22 angeschlossen, welches von einem Motor 23 angetrieben wird. In anderer Ausführung könnten die Antriebselemente 18 auch an mehrere Verteilergetriebe 22 angekoppelt werden, wobei jedes Verteilergetriebe 22 von einem eigenen Antriebsmotor 23 angetrieben sein kann, so dass alle Linearantriebe 10 angetrieben werden. Es ist jedoch auch denkbar, dass nur bestimmte Linearantriebe 10 angetrieben werden, wenn beispielsweise das Verteilergetriebe, oder die Verteilergetriebe 22 schaltbar sind. Bei mehreren Verteilergetrieben 22 könnte jedem Verteilergetriebe ein Motor zugeordnet werden, so dass auch dann bestimmte Linearantriebe 10 in Betrieb gesetzt werden könnten. Die Ansteuerung des Antriebsmotors 23 bzw. der Antriebsmotoren 23 erfolgt über einen Handschalter 24 und einer entsprechend ausgelegten Steuereinheit 25. Eine derartige Ausführung kann beispielsweise eingesetzt werden, wenn bei einem Möbel mehrere Bauteile verstellbar sind.

Die Erfindung ist nicht auf die dargestellten Ausführungsbeispiele beschränkt. Wesentlich ist der Antrieb der Spindel vom Antriebsmotor 16 aus über das einstellbare Antriebselement 18.

## Patentansprüche

1. Linearantrieb mit mindestens einer Spindel, die jeweils von einer Antriebsanordnung rotierend antreibbar ist, die einen Antriebsmotor und ein damit antriebstechnisch gekoppeltes Untersetzungsgetriebe enthält, **dadurch gekennzeichnet, dass** die Antriebsanordnung mit mindestens einem Antriebselement (18) ausgestattet ist, dessen Eingangselement gegenüber dem Abtriebsglied wahlweise einstellbar ist.

2. Linearantrieb nach Anspruch 1, **dadurch gekennzeichnet, dass** das einstellbare Antriebselement (18) innerhalb seines Stellbereiches stufenlos einstellbar ist.

3. Linearantrieb nach Anspruch 1 oder 2, **dadurch gekennzeichnet, dass** das Antriebselement (18) ein strangförmiges, biegsames Antriebselement ist, oder wenigsens ein Gelenk, beispielsweise ein Kugel- oder Kreuzgelenk enthält.

4. Linearantrieb nach einem oder mehreren der vorhergehenden Ansprüche 1 bis 3, **dadurch gekennzeichnet, dass** die Antriebsanordnung mindestens zwei verschiedene Antriebselemente (18) enthält, beispielsweise ein oder mehrere strangförmige, biegsame Antriebselemente und ein oder mehrere Kugel- bzw. Kreuzgelenke.

5. Linearantrieb nach einem oder mehreren der vorhergehenden Ansprüche 1 bis 4, **dadurch gekennzeichnet, dass** der Antriebsmotor (16) und das Untersetzungsgetriebe (12, 13) durch wenigstens ein einstellbares Antriebselement (18) miteinander gekoppelt sind.

6. Linearantrieb nach einem oder mehreren der vorhergehenden Ansprüche 1 bis 5, **dadurch gekennzeichnet, daß** die Drehachse des Rotors jedes Antriebsmotors (16) parallel und im Abstand zur Drehachse der Spindel (15) steht.

7. Linearantrieb nach Anspruch 6, **dadurch gekennzeichnet, daß** jeder Antriebsmotor (16) mittels Befestigungselementen (20, 21) am Flanschrohr (14) des Linearantriebes (10) festgelegt ist.

8. Linearantrieb nach einem oder mehreren der vorhergehenden Ansprüche 1 bis 7, **dadurch gekennzeichnet, daß** die Drehachse des Rotors des Antriebsmotors (16) schräg zur Drehachse der Spindel (15) steht.

9. Linearantrieb nach Anspruch 8, **dadurch gekennzeichnet, daß** jeder Antriebsmotor (16) mittels eines Halters (19) am Flanschrohr (14) des Linearantriebes (10) festgelegt ist.

10. Linearantrieb nach einem oder mehreren der vorhergehenden Ansprüche 1 bis 9, **dadurch gekennzeichnet, daß** das Untersetzungsgetriebe ein Schneckentrieb ist, und daß die Schnecke (12) mit dem strangförmigen Antriebselement (18) gekoppelt ist.

11. Linearantrieb nach einem oder mehreren der vorhergehenden Ansprüche 1 bis 10, **dadurch gekennzeichnet, daß** das strangförmige Antriebselement (18) mittels einer ausrückbaren Kupplung mit dem Antriebsmotor (16) gekoppelt ist.

12. Linearantrieb nach einem oder mehreren der vorhergehenden Ansprüche 1 bis 11, **dadurch gekennzeichnet, daß** das strangförmige Antriebselement (18) aus einer Vielzahl von Windungen besteht, die durch Wickeln eines Drahtes gebildet sind.

13. Linearantrieb nach Anspruch 12, **dadurch gekennzeichnet, daß** das strangförmige Antriebselement (18) aus mehreren ineinander geschobenen von aus Windungen unterschiedlichen Durchmessers bestehenden Lagen gebildet ist.

14. Linearantrieb nach einem oder mehreren der vorhergehenden Ansprüche 1 bis 13, **dadurch gekennzeichnet, dass** aus mehreren Linearantrieben 10 eine Antriebseinheit gebildet ist, dass die Antriebselemente 18 aller Linearantriebe mit den Abtriebsgliedern eines Verteilergetriebes 22 oder mit den Abtriebselementen mehrerer Verteilergetriebe 22 gekoppelt sind.

15. Linearantrieb nach Anspruch 14, **dadurch gekennzeichnet, dass** jedes Verteilergetriebe 22 von einem Antriebsmotor 23 antreibbar ist, oder dass alle Verteilergetriebe 22 von einem Antriebsmotor 23 antreibbar sind.

16. Linearantrieb nach Anspruch 14 oder 15, **dadurch gekennzeichnet, dass** jeder Antriebsmotor 23 oder dass alle Antriebsmotoren 23 von einem Handschalter 24 über eine Steuereinheit 25 ansteuerbar ist bzw. sind.
